# EUROPÄISCHE PATENTSCHRIFT

(11) **EP 0 633 847 B1**
(45) Veröffentlichungstag und Bekanntmachung des Hinweises auf die Patenterteilung: **21.08.1996**
(21) Anmeldenummer: 93903213.2
(22) Anmeldetag: 21.01.1993
(51) Int. Cl.: B60S 9/02, B66C 23/78

(54) **VERRIEGELUNGSVORRICHTUNG FÜR AUSZIEHBARE STÜTZORGANE**
LOCKING DEVICE FOR PULL-OUT SUPPORTS
DISPOSITIF DE VERROUILLAGE POUR BEQUILLES TELESCOPIQUES

(30) Priorität: 06.04.1992 DE 4211493
(43) Veröffentlichungstag der Anmeldung: 18.01.1995
(73) Patentinhaber: Putzmeister-Werk Maschinenfabrik GmbH, D-72629 Aichtal (DE)
(72) Erfinder: BENCKERT, Hartmut, D-70794 Filderstadt (DE); SCHILLINGER, Dieter, D-73765 Neuhausen (DE)
(74) Vertreter: Wolf, Eckhard, Dr.-Ing.
(86) Internationale Anmeldenummer: EP9300131
(87) Internationale Veröffentlichungsnummer: WO9319957

(56) Entgegenhaltungen:
- EP-A- 0 380 716
- EP-A- 0 495 166
- US-A- 3 279 622
- PATENT ABSTRACTS OF JAPAN vol. 13, no. 521 (M-896)(3869) 21. November 1989 & JP A 01 212 646 (FURUKAWA) 25 AUGUST 1989

## Beschreibung

Verriegelungsvorrichtung für an einem Fahr- oder Traggestell angeordnete, von einer eingezogenen Transportstellung in eine ausgezogene Abstützstellung vorzugsweise seitlich ausziehbare, ausschwenkbare oder teleskopierbare Stützorgane, insbesondere für Stützbeine an fahrbaren Arbeitsmaschinen, wie Betonpumpen oder Hubvorrichtungen, mit einem in einer gestellfesten Führungsbüchse quer zur Ausziehrichtung des Stützorgans zwischen einer Sperrstellung und einer Entsperrstellung verschiebbaren, unter der Einwirkung einer Feder in Richtung Sperrstellung vorgespannten Riegelbolzen, und einem den Riegelbolzen zwischen der Sperrstellung und der Entsperrstellung verschiebenden Betätigungsorgan.

Fahrbare Arbeitsmaschinen mit Kran- oder Verteilermastaufbauten werden in der Arbeitsstellung üblicherweise mit seitlich ausfahrbaren oder ausschwenkbaren Stützbeinen am Boden abgestützt (EP-A-357 988). Dabei ist es wichtig, daß die beispielsweise mittels Hydromotoren ausfahrbaren Stützorgane sowohl in ihrer inneren Transportstellung als auch in ihrer Abstützstellung mit Hilfe der Verriegelungsvorrichtung wirksam und zuverlässig arretiert sind. Eine Verriegelungsvorrichtung der eingangs angegebenen Art ist aus der JP-A-1-212646 bekannt. Das Betätigungsorgan ist dort am ausziehbaren Stützorgan angeordnet und über einen mitbewegten Bowdenzug und einen Winkelhebel mit dem Riegelbolzen gekoppelt.

Der Erfindung liegt die Aufgabe zugrunde, eine Verriegelungsvorrichtung zu schaffen, die mit einfachen Mitteln sicherstellt, daß die Stützorgane sowohl in ihrer Transportstellung als auch in ihrer Abstützstellung automatisch verriegelt werden und die nur zur Entriegelung betätigt werden muß.

Zur Lösung dieser Aufgabe wird gemäß der Erfindung die Merkmalskombination des Anspruchs 1 vorgeschlagen:

Mit den erfindungsgemäßen Vorkehrungen wird erreicht, daß die Verriegelungsvorrichtung beim Ausziehen der Stützorgane nur zum Entriegeln betätigt werden muß, während das Verriegeln in den beiden Endstellungen der Stützorgane automatisch erfolgt. Dadurch sind Fehlbedienungen beim Ein- und Ausfahren der Stützorgane, die auf eine fehlende Verriegelung zurückzuführen sind, ausgeschlossen.

Eine vorteilhafte Ausgestaltung der Erfindung sieht vor, daß das Betätigungsorgan ein vorzugsweise mittels eines Hebels verschwenkbares Kulissenelement aufweist, daß das Kulissenelement zwei durch eine Betätigungskurve miteinander verbundene Kurven- oder Rastabschnitte aufweist, gegen die der Mitnehmer in der Sperrstellung und in der Entsperrstellung des Riegelbolzens unter der Einwirkung der Feder und unter Herstellung einer Form- und/oder kraftschlüssigen Halte- oder Rastverbindung anliegt, und daß der Mitnehmer in der Freigabestellung des Riegelbolzens von dem Kulissenelement abhebbar ist, während das Kulissenelement vorzugsweise unter der Einwirkung der Schwerkraft selbsttätig in seine Sperrstellung zurückschwenkbar ist. Das Kulissenelement kann zu diesem Zweck bezüglich seiner beiden vorzugsweise senkrecht zueinander ausgerichteten Kurven- oder Rastabschnitte exzentrisch um eine büchsenfeste Horizontalachse schwenkbar gelagert sein, während der Hebel in seiner Sperrstellung im wesentlichen lotrecht nach unten weist und in seiner Entsperrstellung im wesentlichen horizontal ausgerichtet ist.

Eine weitere vorteilhafte Ausgestaltung der Erfindung sieht vor, daß der Riegelbolzen auf der Seite des Stützorgans über die Führungsbüchse übersteht, und daß die voneinander abgewandten Rastflächen des Rast- und Leitorgans parallel zur Verschieberichtung des Riegelbolzens ausgerichtet sind und in der Sperrstellung seitlich gegen den Riegelbolzen anschlagen, während die Leitkurve des Rast- und Leitorgans gegen die freie Stirnfläche des Riegelbolzens anliegt.

Vorteilhafterweise ist das Plattenförmige Kulissenelement zwischen zwei büchsenfesten Lagerplatten gelagert, während der Mitnehmer als in den Bereich zwischen den Lagerplatten eingreifender, vorzugsweise gerader zapfenförmiger Ausleger ausgebildet ist. Die beiden Kurven- oder Rastabschnitte des Kulissenelements sind zweckmäßig als zueinander senkrechte geradlinige Kanten des plattenförmigen Kulissenelements ausgebildet, gegen die der zapfenförmige Mitnehmer in seiner Längserstreckung anliegt.

Eine zusätzliche Sicherung des Riegelbolzens in seiner Verriegelungsstellung wird dadurch erzielt, daß im rückwärtigen Büchsenteil, vorzugsweise im Bereich eines rückwärtigen Büchsenauslegers, eine vom Riegelbolzen in der Entsperr- und Freigabestellung versperrte und in der Sperrstellung freigegebene Querbohrung zur Aufnahme eines den Flügelbolzen rückwärtig übergreifenden Sicherheitssteckers angeordnet ist.

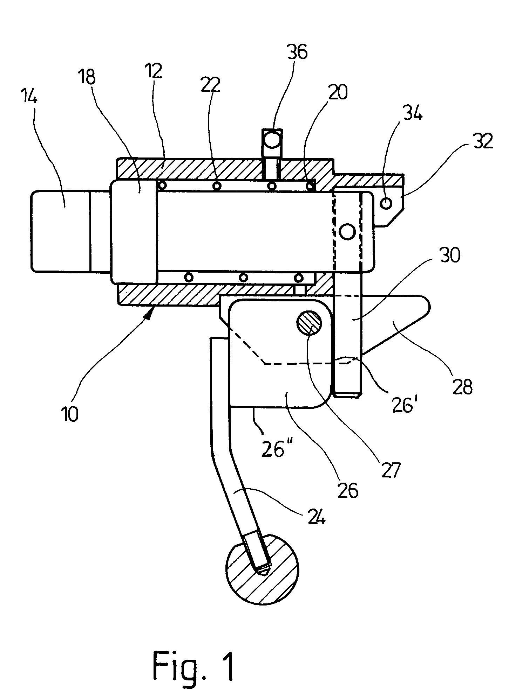

Im folgenden wird die Erfindung anhand eines in der Zeichnung in schematischer Weise dargestellten Ausführungsbeispiels näher erläutert. Es zeigen
- Fig. 1: einen senkrechten Schnitt durch eine Verriegelungsvorrichtung für teleskopierbare Stützbeine von fahrbaren Arbeitsmaschinen;
- Fig. 2a bis d: eine Draufsicht auf ein teleskopierbares Stützbein mit Verriegelungsvorrichtung in verschiedenen Verschiebe- und Betätigungsstellungen.

Die in der Zeichnung dargestellte Verriegelungsvorrichtung besteht im wesentlichen aus einem an einem nicht dargestellten gestellfesten Teil, vorzugsweise an einem Stützbeinkasten einer Arbeitsmaschine angeordneten Riegelmechanismus 10 und einem an einem in Richtung des Doppelpfeils 50 im wesentlichen horizontal gegenüber dem Stützbeinkasten verschiebbaren Stützbein 40 angeordneten Rast- und Leitorgan 42.

Der Riegelmechanismus 10 umfaßt eine gestellfeste Büchse 12, einen in der Büchse 12 axial geführten, stirnseitig überstehenden Riegelbolzen 14, eine zwischen einer rückwärtigen Innenschulter 20 der Büchse 12 und einem Bund 18 des Riegelbolzens 14 abgestützte Druckfeder 22, einen zwischen zwei büchsenfesten Lagerplatten 28 um eine exzentrisch angeordnete Achse 27 verschwenkbaren, eine Kulissenplatte 26 tragenden Betätigungshebel 24 und einen im rückwärtigen Teil des Bolzens senkrecht überstehenden, in den Bereich zwischen den beiden Lagerplatten 28 eingreifenden und dort in seiner Längserstreckung gegen den benachbarten Kantenabschnitt 26' der Kulissenplatte 26 unter der Einwirkung der Feder 22 anliegenden Mitnehmerzapfen 30.

Andererseits weist das am teleskopierbaren Stützbein 40 angeordnete, die Gestalt einer Leiste aufweisende Rast- und Leitorgan 42 einander abgewandte Riegelflächen 46, 48 sowie eine Leitkurve 44 auf.

Um eine ausreichende Schmierung zu gewährleisten, ist die Führungsbüchse 12 mit einem Schmiernippel 36 versehen, der entweder an eine zentrale Fettversorgung angeschlossen oder extern mit Fett beaufschlagt werden kann.

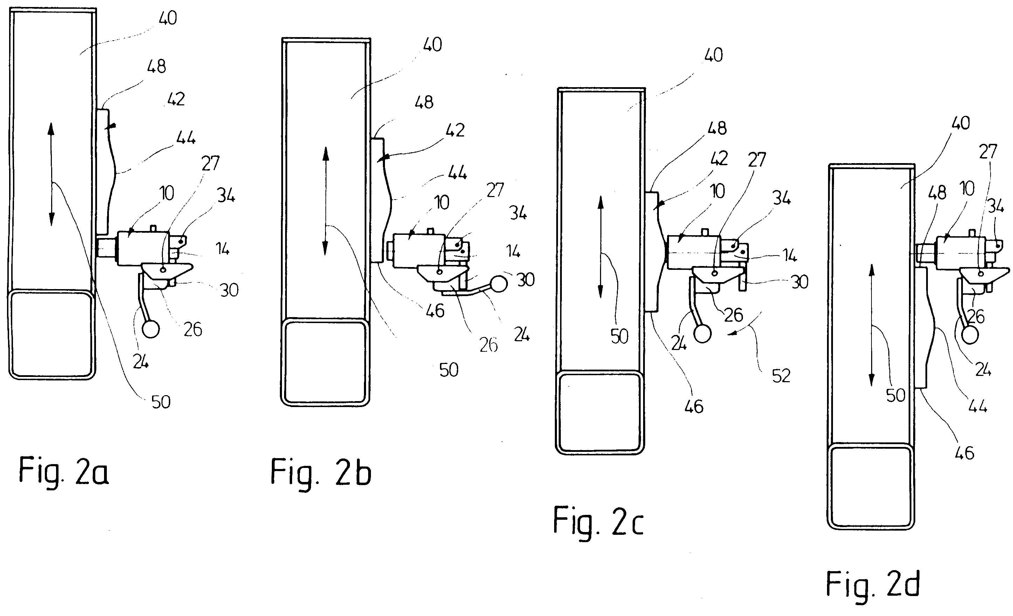

Im folgenden wird anhand der Fig. 2a bis d erläutert, wie der Riegelmechanismus 10 und das Rast- und Leitorgan 42 in den verschiedenen Stellungen des teleskopierbaren Stützbeins 40 zusammenwirken. Der Übersichtlichkeit halber wurde in diesen Figuren das Stützbein 40 in Draufsicht und der Verriegelungsmechanismus 10 in einer gegenüber dem Stützbein 40 um 90° um die Büchsenachse gedrehten Seitenansicht dargestellt. In der Darstellung nach Fig. 2a befindet sich das Stützbein 40 in seiner zurückgezogenen Transportstellung, in der der in seiner Sperrstellung befindliche Riegelbolzen 14 seitlich gegen die äußere Rastfläche 46 des Rast- und Leitorgans 42 anliegt. Der Hebel 24 weist in dieser Stellung im wesentlichen lotrecht nach unten, so daß der Mitnehmerzapfen 30 unter der Einwirkung der Feder 22 gegen die Seitenkante 26' der Kulissenplatte 26 anliegt. Vor dem Ausfahren des Stützbeins 40 in Richtung des Pfeils 50 wird der Hebel 24 im Gegenuhrzeigersinn (Figuren) um die Achse 27 geschwenkt und dabei der Riegelbolzen 14 über die Kulissenplatte 26 und den Mitnehmerzapfen 30 in seine in Fig. 2b gezeigte Entsperrstellung verschoben. In dieser Lage wird der Hebel 24 unter der Einwirkung der Feder 22 über den gegen den Kurven- und Rastabschnitt 26'' angepreßten Mitnehmerzapfen 30 in seiner horizontal ausgerichteten Entsperrstellung gehalten. Der Riegelbolzen 14 gibt in dieser Stellung den Verschiebeweg für das Stützbein 40 mit seinem Rast- und Leitorgan 42 frei (Fig. 2b). Im Verlauf der Verschiebung in Richtung des Pfeils 50 läuft der Riegelbolzen 14 mit seiner Stirnfläche auf der Leitkurve 44 auf und wird dabei weiter in das Innere der Büchse 12 verschoben. Dabei hebt der Mitnehmerzapfen 30 von dem Kurvenabschnitt 26'' ab, so daß schließlich in der rückwärtigen Freigabestellung des Riegelbolzens 14 der Betätigungshebel 24 unter der Einwirkung der Schwerkraft in Richtung des Pfeils 52 in seine lotrecht nach unten weisende erste Endstellung zurückgelangt (Fig. 2c). Beim weiteren Ausfahren gelangt das Stützbein 40 schließlich in die in Fig. 2d gezeigte ausgezogene Abstützstellung, in der der Verriegelungsbolzen 14 unter der Einwirkung der Feder 22 hinter die Rastfläche 48 des Rast- und Leitorgans 42 in seine Sperrstellung verschoben wird.

Zum Zurückfahren des Stützbeins 40 von der in Fig. 2d gezeigten Arbeitsstellung aus muß zunächst der Hebel 24 wieder in die in Fig. 2b gezeigte Horizontallage geschwenkt werden, in der der Verriegelungsbolzen 14 in seine Entsperrstellung gelangt. Im weiteren Verlauf der Verschiebebewegung wird bei Erreichen der Stellung gemäß Fig. 2c der Hebel 24 wieder selbsttätig in seine lotrecht nach unten weisende Lage geschwenkt, so daß der Riegelbolzen 14 bei Erreichen der Position nach Fig. 2a wieder automatisch in seine Sperrstellung vor der Rastfläche 46 gelangen kann.

Die Führungsbüchse 12 ist mit einem rückwärtigen Ausleger 32 versehen, in welchem eine vom rückwärtigen Teil des Riegelbolzens 14 in der Entsperrstellung und in der Freigabestellung versperrte und in der Sperrstellung freigegebene Querbohrung 34 zur Aufnahme eines nicht dargestellten Sicherheitssteckers angeordnet ist.

Zusammenfassend ist folgendes festzustellen: Die Erfindung bezieht sich auf eine Verriegelungsvorrichtung für seitlich teleskopierbare Stützbeine an Arbeitsmaschinen. Die Verriegelungsvorrichtung weist einen gestellfesten Riegelmechanismus 10 und ein mit einem verschiebbaren Riegelbolzen 14 des Riegelmechanismus 10 zusammenwirkendes, am ausziehbaren Stützbein 40 angeordnetes Rast- und Leitorgan 42 auf. Der Riegelmechanismus 10 ist so ausgebildet, daß der Riegelbolzen 14 beim Verschieben des Stützbeins 40 am jeweiligen Ende des Verschiebewegs automatisch in seine Sperrstellung gelangt und daher nur zum Entriegeln betätigt werden muß.

## Patentansprüche

1. Verriegelungsvorrichtung für an einem Fahr- oder Traggestell angeordnete und von einer eingezogenen Transportstellung in eine ausgezogene Arbeitsstellung, vorzugsweise seitlich ausfahrbare, ausschwenkbare oder teleskopierbare Stützorgane (40), insbesondere für Stützbeine an Arbeitsmaschinen, mit einem Riegelbolzen (14), der in einer gestellfesten Führungsbüchse (12), die quer zur Ausziehrichtung (50) des Stützorgans (40) angeordnet ist, zwischen einer Sperrstellung und einer Entsperrstellung verschiebbar ist und unter der Einwirkung einer Feder (22) in Richtung Sperrstellung vorgespannt wird, und einem den Riegelbolzen (14) zwischen der Sperrstellung und der Entsperrstellung verschiebenden Betätigungsorgan (24), **dadurch gekennzeichnet,** daß das relativ zur Führungsbüchse (12) zwischen zwei Endstellungen verschwenk- oder verschiebbare Betätigungsorgan (24) gegen einen am Riegelbolzen (14) angeordneten Mitnehmer (30) anliegt und auf diesen unter Verschiebung des Riegelbolzens (14) einwirkt, daß am ausziehbaren Teil des Stützorgans (40) ein Rast- oder Leitorgan (42) starr angeordnet ist, das je eine in der Transportstellung und in der Abstützstellung des Stützorgans gegen den in seiner Sperrstellung befindlichen Riegelbolzen (14) anschlagende Riegelfläche (46,48) sowie eine sich im Bereich zwischen den beiden Riegelflächen (46, 48) erstreckende, auf den Riegelbolzen (14) einwirkende und diesen zwischen seiner Entsperrstellung und einer Freigabestellung verschiebende Leitkurve (44) aufweist, wobei der Mitnehmer (30) in der Freigabestellung von dem in seiner der Entsperrstellung entsprechenden Endstellung befindlichen Betätigungsorgan (24,26) abhebbar oder entkuppelbar und das entkuppelte Betätigungsorgan (24, 26) selbsttätig in seine der Sperrstellung entsprechende Endstellung bewegbar ist.

2. Verriegelungsvorrichtung nach Anspruch 1, **dadurch gekennzeichnet,** daß das Betätigungsorgan (24,26) ein vorzugsweise mittels eines Hebels (24) betätigbares Kulissenelement (26) aufweist, daß das Kulissenelement (26) zwei durch eine Betätigungskurve miteinander verbundene Kurven- oder Rastabschnitte (26',26'') aufweist, gegen die der Mitnehmer (30) in der Sperrstellung und in der Entsperrstellung des Riegelbolzens (14) unter der Einwirkung der Feder (22) und unter Herstellung einer Halte- oder Rastverbindung anliegt, und daß der Mitnehmer (40) in der Freigabestellung des Riegelbolzens (14) von dem Kulissenelement (26) abhebbar ist und dabei das Betätigungsorgan vorzugsweise unter der Einwirkung der Schwerkraft selbsttätig in seine der Sperrstellung entsprechende Endstellung zurückschwenkbar ist.

3. Verriegelungsvorrichtung nach Anspruch 2, **dadurch gekennzeichnet,** daß das Kulissenelement (26) bezüglich seiner beiden vorzugsweise senkrecht zueinander ausgerichteten Kurven- oder Rastabschnitte (26', 26'') exzentrisch um eine büchsenfeste Horizontalachse (27) schwenkbar gelagert ist, und daß der Hebel (24) in seiner der Sperrstellung entsprechenden Endstellung im wesentlichen lotrecht nach unten weist und in seiner der Entsperrstellung entsprechenden Endstellung im wesentlichen horizontal ausgerichtet ist.

4. Verriegelungsvorrichtung nach einem der Ansprüche 1 bis 3, **dadurch gekennzeichnet,** daß der Riegelbolzen (14) auf der Seite des Stützorgans (40) über die Führungsbüchse (12) übersteht, und daß die voneinander abgewandten Riegelflächen des Rast- und Leitorgans (42) parallel zur Verschieberichtung des Riegelbolzens (14) ausgerichtet sind und in der Sperrstellung seitlich gegen den Riegelbolzen (14) anschlagen, und daß die Leitkurve (44) des Rast- und Leitorgans (42) gegen die freie Stirnfläche des Riegelbolzens (14) einwirkt.

5. Verriegelungsvorrichtung nach einem der Ansprüche 1 bis 4, **dadurch gekennzeichnet,** daß das plattenförmige Kulissenelement (26) zwischen zwei büchsenfesten Lagerplatten (28) gelagert ist und daß der Mitnehmer (30) als in den Bereich zwischen den Lagerplatten (28) eingreifender, vorzugsweise gerader zapfenförmiger Ausleger ausgebildet ist.

6. Verriegelungsvorrichtung nach einem der Ansprüche 2 bis 5, **dadurch gekennzeichnet,** daß die beiden Kurven- oder Rastabschnitte (26', 26'') als zueinander senkrechte geradlinige Randkanten des plattenförmigen Kulissenelements (26) ausgebildet sind.

7. Verriegelungsvorrichtung nach einem der Ansprüche 1 bis 6, **dadurch gekennzeichnet**, daß im rückwärtigen Büchsenteil, vorzugsweise im Bereich eines rückwärtigen Büchsenauslegers (32) eine vom Riegelbolzen (12) in der Entsperrstellung und in der Freigabestellung versperrte und in der Sperrstellung freigegebene Querbohrung (34) zur Aufnahme eines Sicherheitssteckers angeordnet ist.

## Claims

1. Locking device for supports (40) which are arranged on an undercarriage or support frame and which can be extended, swung out or telescoped preferably laterally from a retracted transport position into an extended operating position, in particular for support legs on travelling machines, with a locking bolt (14) which can be displaced in a guide sleeve (12) connected to the frame and arranged transversely to the extension direction (50) of the support (40) between a locking position and an unlocking position and which is pretensioned in the direction of the locking position under the action of a spring (22) and with an actuating member (24) which displaces the locking bolt (14) between the locking position and the unlocking position, characterized in that the actuating member (24) which can be swung or displaced relative to the guide sleeve (12) between two end positions, rests against a driving element (30) arranged on the locking bolt (14) and acts on said driving element with a displacement of the locking bolt (14), in that an engagement or guide member (42) is rigidly arranged on the extendable part of the support (40) and has in each case one locking surface (46, 48) which strikes the locking bolt (14) located in its locking position in the transport position and in the support position of the support as well as a lead cam (44) which extends in the region between the two locking surfaces (46, 48), acts on the locking bolt (14) and displaces the latter between its unlocking position and a release position, in which connection the driving element (30) can be lifted off or uncoupled in the release position from the actuating member (24, 26) which is in its end position corresponding to the unlocking position and the uncoupled actuating member (24, 26) can be moved automatically into its end position corresponding to the locking position.

2. Locking device according to Claim 1, characterized in that the actuating member (24, 26) has a link element (26) which is preferably actuable by means of a lever (24), in that the link element (26) has two cam or engagement sections (26', 26'') which are connected to one another by an actuating cam and against which the driving element (30) rests in the locking position and in the unlocking position of the locking bolt (14) under the action of the spring (22) and with the establishing of a holding or engagement connection and that the driving element (40) can be lifted from the link element (26) in the release position of the locking bolt (14) and the actuating member can in this case be automatically swung back into its end position corresponding to the locking position preferably under the influence of gravity.

3. Locking device according to Claim 2, characterized in that the link element (26) is mounted eccentrically and pivotally round a horizontal shaft (27) connected to the sleeve with respect to its two cam or engagement sections (26', 26'') which are preferably orientated perpendicularly to one another and in that the lever (24) points substantially vertically downwardly in its end position corresponding to the locking position and is directed substantially horizontally in its end position corresponding to the unlocking position.

4. Locking device according to one of Claims 1 to 3, characterized in that the locking bolt (14) protrudes on the side of the support (40) beyond the guide sleeve (12) and that the locking surfaces of the engagement and guide member (42) which face away from one another are directed parallel to the direction of displacement of the locking bolt (14) and, in the locking position, come laterally against the locking bolt (14) and in that the lead cam (44) of the engagement and guide member (42) acts against the free end surface of the locking bolt (14).

5. Locking device according to one of Claims 1 to 4, characterized in that the plate-shaped link element (26) is mounted between two bearing plates (28) connected to the sleeve and in that the driving element (30) is designed as an arm which is preferably in the form of a straight pin and engages in the region between the bearing plates (28).

6. Locking device according to one of Claims 2 to 5, characterized in that the two cam or engagement sections (26', 26'') are designed as straight edges of the plate-shaped link element (26) which are arranged perpendicularly to one another.

7. Locking device according to one of Claims 1 to 6, characterized in that in the rear part of the sleeve, preferably in the region of a rear sleeve arm (32), there is arranged a transverse bore (34) for receiving a safety plug, the bore being blocked by the locking bolt (12) in the unlocking position and in the release position and being released in the locking position.

## Revendications

1. Dispositif de verrouillage pour des béquilles (40) orientables ou télescopiques, disposées sur un châssis ou sur un cadre porteur et qui peuvent être tirées, latéralement de préférence, d'une position de transport rentrée dans une position de travail sortie, en particulier pour des béquilles montées sur des machines de travail, avec un boulon de verrouillage (14), mobile dans une douille de guidage (12) solidaire du châssis, disposée à la transversale du sens de sortie (50) de la béquille (40), entre une position de verrouillage et une position de déverrouillage, et pré-contraint sous l'effet d'un ressort (22) dans le sens de la position de blocage, et avec un organe de commande (24) qui déplace le boulon de verrouillage (14) entre la position de blocage et la position de déverrouillage, caractérisé en ce que l'organe de commande (24), qui peut se déplacer ou pivoter par rapport à la douille de guidage (12) entre deux positions extrêmes, s'applique contre un entraîneur (30) disposé sur le boulon de verrouillage (14), sur lequel il agit en déplacant le boulon (14), en ce qu'un organe de guidage et d'arrêt (42) est monté rigidement sur la partie télescopique de la béquille (40), cet organe présentant une surface de verrouillage (46, 48), qui bute en position de transport et et en position d'appui de la béquille contre le boulon de verrouillage (14), situé dans sa position de blocage, ainsi qu'une came de guidage (44), qui s'étend dans la zone comprise entre les deux surfaces de verrouillage (46, 48), agit sur le boulon de verrouillage (14), et déplace ce dernier entre sa position de déverrouillage et une position de dégagement, l'entraîneur (30), en position de dégagement, pouvant être décollé ou désaccouplé de l'organe de commande (24, 26), situé dans sa position extrême correspondante à la position de déverrouillage, et l'organe de commande (24, 26) désaccouplé pouvant être ramené automatiquement dans sa position extrême, correspondante à la position de blocage.

2. Dispositif de verrouillage suivant la revendication 1, caractérisé en ce que l'organe de commande (24, 26) présente un élément de coulisse (26), actionnable de préférence au moyen d'un levier (24), en ce que l'élément de coulisse (26) présente deux sections de came ou d'arrêt (26', 26''), reliées entre elles par une came de commande, et contre lesquelles s'applique l'entraîneur (30) dans la position de blocage et dans la position de déverrouillage du boulon (14), sous l'effet du ressort (22) et en créant un assemblage par enclenchement ou de retenue, et en ce que l'entraîneur (40), dans la position de dégagement du boulon de verrouillage (14), peut se décoller de l'élément de coulisse (26), l'organe de commande pouvant alors repivoter automatiquement, de préférence sous l'effet de la pesanteur, dans sa position extrême correspondante à la position de blocage.

3. Dispositif de verrouillage suivant la revendication 2, caractérisé en ce que l'élément de coulisse (26) a un montage excentré et pivotant autour d'un axe horizontal (27) solidaire de la douille, par rapport à ses deux sections de came ou d'arrêt (26', 26'') de préférence perpendiculaires entre elles, et en ce que le levier (24) est essentiellement dirigé à la verticale vers le bas dans sa position extrême, correspondante à la position de blocage, et à l'horizontale dans sa position extrême, correspondante à la position de déverrouillage.

4. Dispositif de verrouillage suivant l'une des revendications 1 à 3, caractérisé en ce que le boulon de verrouillage (14) dépasse de la douille de guidage (12) sur le côté de la béquille (40), et en ce que les surfaces de verrouillage de l'organe de guidage et d'arrêt (42), opposées l'une à l'autre, sont orientées à la parallèle du sens de déplacement du boulon de verrouillage (14), et butent latéralement contre le boulon (14) en position de blocage, et en ce que la came de guidage (44) de l'organe de guidage et d'arrêt (42) agit sur la face frontale libre du boulon de verrouillage (14).

5. Dispositif de verrouillage suivant l'une des revendications 1 à 4, caractérisé en ce que l'élément de coulisse (26) en forme de plaque est logé entre deux plaques d'appui (28) solidaires de la douille, et en ce que l'entraîneur (30) a la configuration d'un bras en forme de tourillon, de préférence rectiligne, qui s'engage dans la zone comprise entre les plaques d'appui (28).

6. Dispositif de verrouillage suivant l'une des revendications 2 à 5, caractérisé en ce que les deux sections de came ou d'arrêt (26', 26'') sont réalisées sous forme de bords extrêmes rectilignes, perpendiculaires entre eux, de l'élément de coulisse (26) en forme de plaque.

7. Dispositif de verrouillage suivant l'une des revendications 1 à 6, caractérisé en ce qu'un trou transversal (34), fermé par le boulon de verrouillage (14) en position de déverrouillage et de dégagement, et dégagé en position de blocage, est prévu dans la partie de douille arrière, de préférence dans la zone d'un bras de douille arrière (32), pour recevoir une fiche de sécurité.
